# FASCICULE DE BREVET EUROPEEN

(11) **EP 0 419 349 B1**
(45) Date de publication et mention de la délivrance du brevet: **04.08.1993**
(21) Numéro de dépôt: 90402581.4
(22) Date de dépôt: 19.09.1990
(51) Int. Cl.: A23N 7/00, A23N 15/04

(54) **Machine pour l'épluchage de salades**
Salatschälvorrichtung
Machine for shredding salads

(30) Priorité: 21.09.1989 FR 8912414; 28.06.1990 FR 9008100
(43) Date de publication de la demande: 27.03.1991
(73) Titulaire: SOCIETE LEGUMIERE DU COTENTIN, Lessay (Manche) (FR)
(72) Inventeur: Beaumont, Laurent, Coutance (Manche) (FR)
(74) Mandataire: Cabinet HERRBURGER

(56) Documents cités:
- EP-A- 0 238 430
- DE-C- 223 035
- FR-A- 2 116 868
- FR-A- 2 191 851
- FR-A- 2 553 630
- FR-A- 2 613 911
- FR-A- 2 623 978
- US-A- 3 646 977

## Description

L'invention concerne une machine pour l'épluchage de salades correspondant au préambule de la revendication 1 (FR-A-2623978).

On connaît déjà par les brevets français FR-A-2116068 et FR-A-2191851 des machines pour l'obtention de fonds d'artichauts, suivant lesquelles les artichauts sont maintenus latéralement à hauteur de leur corps, tandis qu'on usine le fond de l'artichaut à l'aide de fraises ou toupies pour pouvoir ensuite le dégager des feuilles du corps de l'artichaut.

Le brevet allemand DE-C-223 035 décrit également une machine destinée à hacher des choux en vue de la fabrication de la choucroute et, à cet effet, il est prévu de presser le chou contre une table pourvue de couteaux afin que la rotation du chou provoque son sectionnement en fines lamelles.

Vis-à-vis de ces machines connues, la présente invention concerne une machine pour l'épluchage de salades comportant des moyens de coupe (9, 12, 16, 17, 20), caractérisée en ce qu'elle comporte des moyens pour maintenir la salade à l'état suspendu par son trognon, et des moyens pour entraîner en rotation les moyens de maintien suivant l'axe de suspension de la salade afin de couper la salade alors qu'elle est entraînée en rotation sur elle-même à l'état suspendu par son trognon.

Suivant une autre caractéristique de l'invention, les moyens pour placer la salade à l'état suspendu comprennent une pince pourvue d'au moins deux branches dont les extrémités sont adaptées pour saisir la salade par sa base à hauteur du trognon, ces extrémités comportant chacune au moins une dent dirigée vers l'axe de la pince pour pénétrer dans la base de la salade à hauteur de son trognon.

Suivant une autre caractéristique de l'invention, la machine comporte des moyens pour déplacer la salade et les moyens de coupe l'un vers l'autre, ces moyens comprenant un chemin de transfert en circuit fermé sur lequel circulent des chariots supportant chacun une pince de maintien à l'état suspendu d'une salade, les moyens de coupe étant répartis le long de ce circuit.

L'invention est représentée à titre d'exemple non limitatif sur les dessins ci-joints dans lesquels :
- la figure 1 est une vue de dessus schématique d'un mode de réalisation de la machine de l'invention,
- la figure 2 est une vue latérale schématique d'un chariot supportant une salade en vue de son épluchage,
- les figures 3 et 4 représentent les opérations effectuées sur la salade à hauteur de deux postes de coupe successifs,
- la figure 5 illustre une opération facultative de sectionnement de la salade suivant un plan passant par son axe,
- la figure 6 représente l'opération finale de coupe de la salade en morceaux.
- la figure 7 est une vue en coupe d'un mode de réalisation du dispositif de maintien des salades à l'état suspendu,
- la figure 8 est une vue en coupe schématique d'un autre mode de réalisation de ce dispositif,
- la figure 9 est une vue de dessous de la figure 8,
- la figure 10 est une vue de dessous d'un autre mode de réalisation d'une tête,
- la figure 11 est une vue développée de la tête de la figure 10.

La présente invention a en conséquence pour but l'automatisation de l'épluchage de la salade afin de réduire, dans de grandes proportions, le personnel très nombreux qui est actuellement nécessaire dans les usines pour éplucher les salades en vue de conditionner la salade nettoyée et coupée en morceaux, dans des sachets pour leur commercialisation.

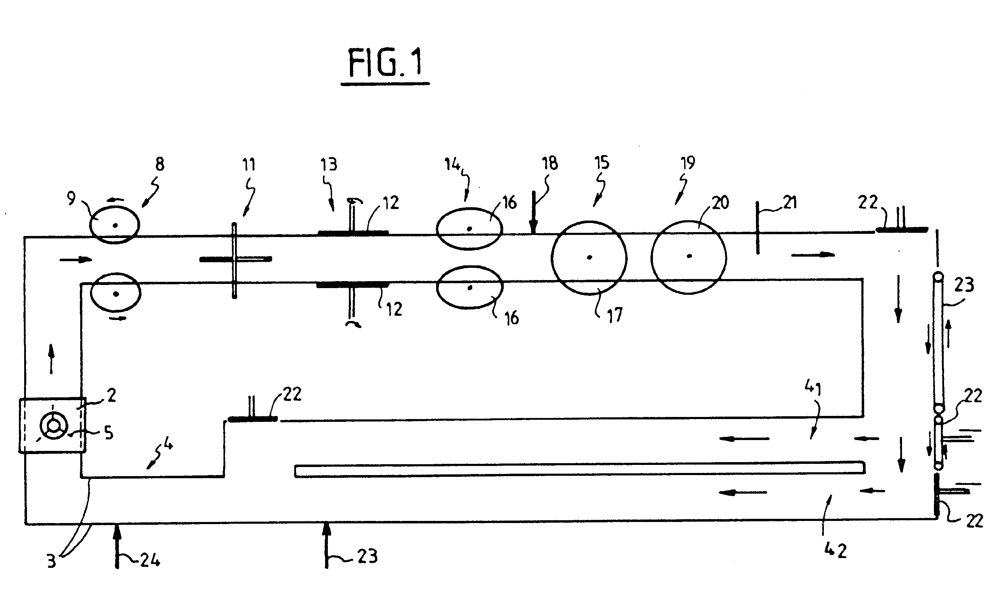

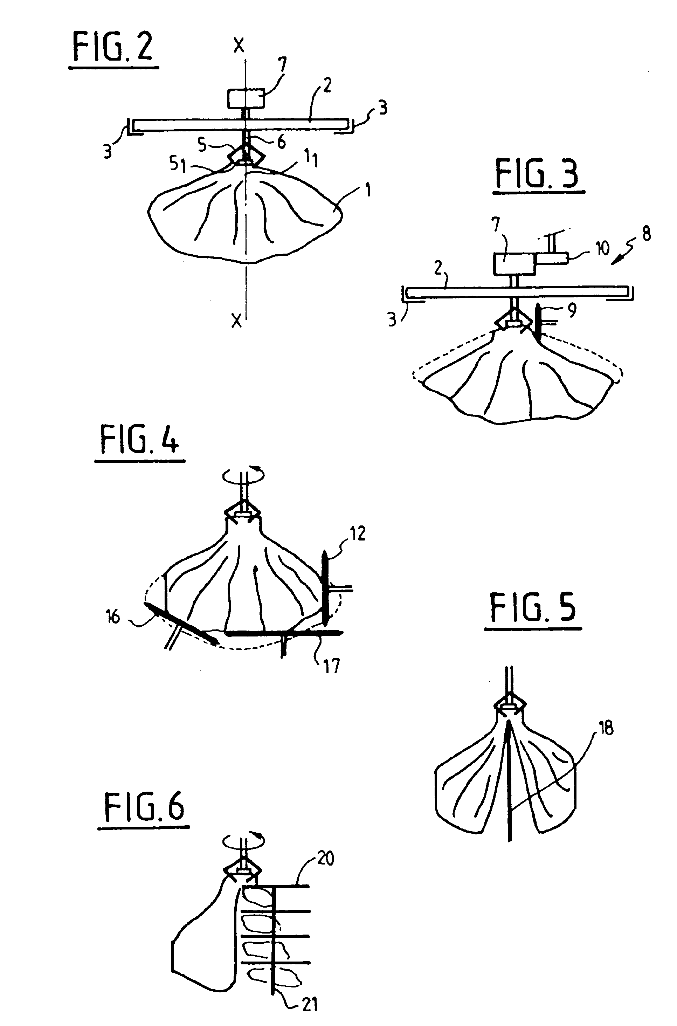

Suivant l'invention, la salade 1 (voir figure 2) est ainsi suspendue par sa base 1₁ à un chariot 2 qui se déplace sur des rails 3 d'un chemin de transfert en circuit fermé 4 (figure 1).

Chaque salade 1 est suspendue à sa base par une pince se composant, par exemple, de trois branches articulées 5 qui sont pourvues à leurs extrémités libres de pointes 5₁ venant pénétrer dans la base de la salade à hauteur de son trognon.

Les branches 5 de cette pince sont fixées sur un axe 6 monté à rotation sur le chariot 2 et qui comporte à son extrémité supérieure, au-dessus de ce chariot, un galet d'entraînement 7.

La salade 1 se trouve ainsi suspendue par sa base à l'axe de rotation 6₆ qui est confondu à l'axe X-X de la salade.

Les chariots 2, comportant chacun une pince supportant une salade 1, sont déplacés sur le circuit 4 et sont tout d'abord amenés à hauteur d'un premier poste de coupe 8 comportant des disques de coupe 9 entraînés en rotation et disposés dans un plan vertical pour pénétrer dans la salade à hauteur de la base des feuilles extérieures, c'est-à-dire à proximité de son trognon. A hauteur de ce poste, est également prévu un galet moteur 10 qui vient en contact avec le galet d'entraînement 7 afin d'entraîner en rotation la salade 1, tandis que les disques de coupe 9 sectionnent la base des feuilles extérieures.

Cette opération consiste donc à nettoyer la salade en ôtant une couronne de feuilles extérieures.

Les chariots 2 arrivent ensuite à hauteur d'un poste 11 où des moyens de détection mécaniques où, de préférence, optiques mesurent le diamètre de la salade et déterminent la position latérale du ou des disques de coupe 12 du poste de coupe suivant 13.

Lorsque le chariot 2 arrive à hauteur de ce poste 12, le galet 7 est à nouveau entraîné en rotation par un galet moteur similaire au galet 10, tandis que le disque 12 entraîné en rotation et disposé dans un plan vertical sectionne l'extrémité des feuilles extérieures pour obtenir une salade dont le diamètre est déterminé par les moyens réglables de mesure du diamètre 11.

A hauteur de ce même poste 13, ou de préférence à hauteur de deux postes successifs 14 et 15, on effectue deux autres opérations de coupe, tout d'abord à l'aide d'au moins un disque de coupe oblique 16 dont la position est également déterminée par les moyens de détection du poste 11. Ce disque sectionne l'extrémité des feuilles disposées à l'intérieur de celles qui ont été sectionnées par les disques 12 puis à l'aide d'un disque de coupe horizontal 17 qui sectionne horizontalement l'extrémité des feuilles situées dans l'axe de la salade.

De préférence, entre ces postes 14 et 15, on prévoira un moyen de mesure 18 déterminant la hauteur de la salade, ce moyen étant relié au disque de coupe 17 du poste 15 afin de déterminer la hauteur de ce disque 17 en fonction de la hauteur de la salade.

Après le poste 15, il est prévu un poste facultatif (voir figure 5) qui comprend un disque de coupe 18 disposé verticalement dans l'axe médian du chemin 4 afin de sectionner la salade suivant un plan axial vertical jusqu'à proximité de sa base. Un tel poste a pour avantage de diviser en deux le coeur même de la salade qui pourrait, dans certains cas, rester entier après l'opération de coupe en morceaux effectuée au poste suivant 19.

A ce poste suivant 19 sont prévus des disques de coupe horizontaux 20 répartis à distance l'un de l'autre sur l'axe de rotation 21, ces disques pénétrant dans la salade jusqu'au coeur afin de la couper en morceaux après nettoyage aux postes 8, 13, 14 et 15.

Les chariots 2 se déplacent alors vers un poste 21 où des moyens détecteurs commandent l'ouverture de la pince afin de libérer le trognon de la salade lorsque ces moyens détecteurs constatent l'arrivée du chariot à ce poste.

Pendant toutes ces opérations de transfert, les chariots 2 qui se suivent à faible distance, sont entraînés par des moyens connus en eux-mêmes et par exemple par des chaînes à picots.

Ce circuit fermé 4 comportant les glissières 3 est également pourvu de divers moyens connus en eux-mêmes et, par exemple, de poussoirs 22 disposés dans les angles du circuit fermé et assurant le changement de direction des chariots, ainsi que des moyens à bande sans fin 23 assurant le déplacement latéral des chariots vers le poste de chargement.

Suivant le mode de réalisation décrit, le circuit 4 comporte deux lignes de chargement parallèles 4₁ et 4₂ à hauteur desquelles une salade est manuellement accrochée à chaque pince de chaque chariot.

A l'extrémité aval de ces lignes 4₁, 4₂ sont également prévues des butées de distribution 23 et 24 contre lesquelles s'accumulent à refus les chariots pourvus de salades. La butée 24, située après la réunion des lignes 4₁ et 4₂, autorise le déplacement successif et à faible intervalle l'un de l'autre des chariots 2 vers le disque 9 du poste de coupe 8.

De préférence, au moins les deux lignes parallèles 4₁ et 4₂ de chargement des chariots en salades, seront inclinées dans le sens de circulation des chariots afin que ceux-ci se déplacement par gravité en roulant sur les glissières 3 afin de s'accumuler contre les butées 23 et 24 en vue de leur écoulement.

Suivant les figures de 7 à 11, on a représenté divers modes de réalisation d'une machine pour l'épluchage de la salade, qui comporte des moyens fiables, peu coûteux et d'encombrement minimum pour le maintien en position suspendue de la salade, ces moyens étant tels qu'ils assurent une bonne tenue de la salade pendant les diverses opérations de coupe qu'elle subit, tout en évitant que les moyens de maintien de la salade à l'état suspendu puissent blesser les ouvriers venant, à cadence très rapide, placer successivement les salades contre les têtes de suspension.

En outre, ces machines permettent de couper la salade, en évitant que le trognon puisse lui-même être sectionné et se retrouver avec les feuilles de salade coupées commercialisées. Egalement, elles permettent de réduire les pertes de matière première résultant de la présence de feuilles ou de parties de feuilles non coupées à proximité du trognon.

Il convient en effet de noter que les salades, suivant leur nature et suivant l'époque à laquelle elles sont récoltées, peuvent présenter des trognons de prolongeant plus ou moins profondément à l'intérieur de la salade.

Pour aboutir à de tels résultats, il convient qu'elles puissent être fixées rapidement et sûrement à l'état suspendu à l'extrémité inférieure d'un support peu encombrant.

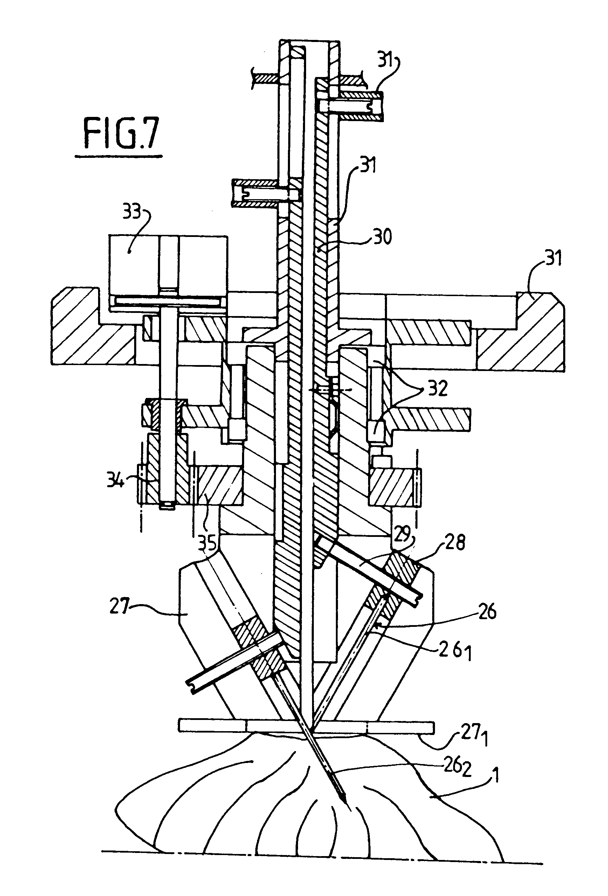

Suivant la figure 7, il est ainsi prévu de réaliser l'accrochage de la salade à l'état suspendu à l'aide de pointes ou aiguilles inclinées 26 qui sont montées coulissantes pour se placer en deux positions extrêmes pour l'une desquelles la totalité des aiguilles (voir aiguille 26₁ sur la figure 7) ne dépasse sensiblement pas de l'extrémité inférieure 27₁ de la tête 27 alors que, pour l'autre de ces positions extrêmes les aiguilles (voir l'aiguille 26₂ sur la figure 3) font saillie au-delà de cette extrémité 27 afin de pénétrer dans le trognon de la salade.

La sortie des aiguilles correspond ainsi à l'accrochage de la salade et le mouvement de rentrée correspond au décrochage automatique du trognon qui subsiste après épluchage de la salade.

Dans l'exemple représenté sur la figure 7, les aiguilles inclinées comportent une embase 28 par laquelle elles sont montées à coulissement sur une tige transversale 29 solidaire de l'extrémité inférieure d'un coulisseau 30 mobile axialement sur la tête. Ces coulisseaux 30 sont actionnés par un moyen moteur pneumatique, hydraulique ou électrique agissant sur des portées d'appui latérales 31.

La tête 27 est montée à rotation sur un support 31 par l'intermédiaire de roulements 32 et à partir d'un moteur 33 dont le pignon de sortie 34 engrène avec une couronne 35 de la tête 27.

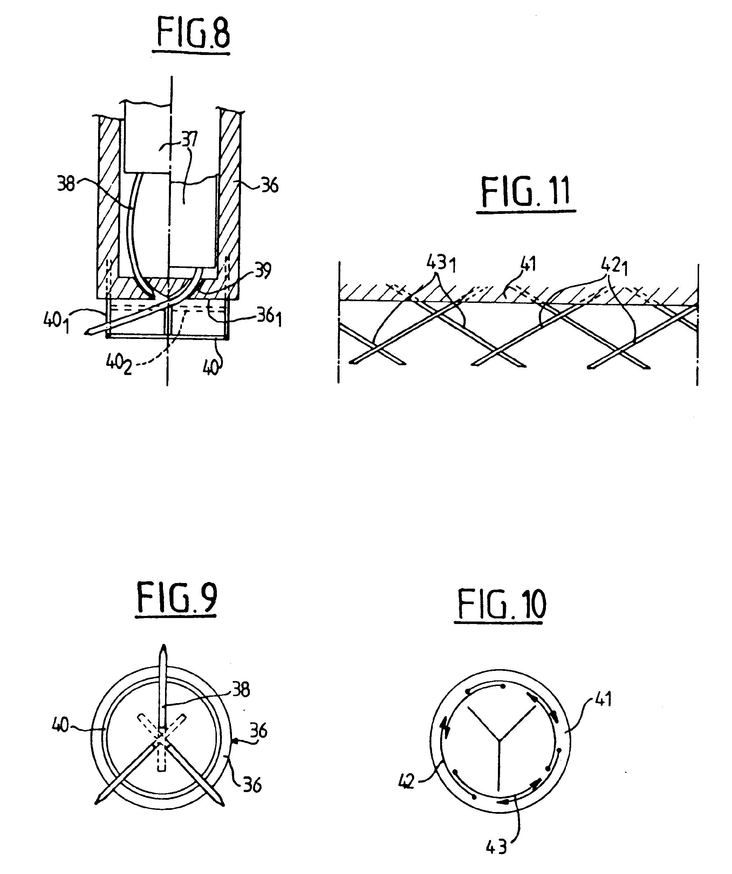

Suivant les figures 8 et 9, il est représenté un autre mode de réalisation de la tête de maintien à l'état suspendu des salades, ce mode de réalisation permettant encore d'améliorer l'accrochage de la salade, tout en réduisant son encombrement.

Dans ce cas, la tête est constituée par un mandrin creux 36, à l'intérieur duquel coulisse un piston 37 mû par un organe moteur quelconque non représenté.

A l'extrémité inférieure de ce piston, sont fixées plusieurs aiguilles souples qui passent à coulissement à l'intérieur de guides courbes 39 formés à l'extrémité inférieure du mandrin 36.

Cette disposition permet d'obtenir à l'aide du déplacement axial d'un piston 37, la manoeuvre à coulissement de plusieurs aiguilles 38 qui, lorsqu'elles sortent de l'extrémité inférieure 36₁ du mandrin 36, sont faiblement inclinées sur l'horizontal (de 30 à 40°) afin d'assurer une bonne fixation de la salade, c'est-à-dire afin d'éviter que la salade ne se décroche lorsqu'elle est entraînée en rotation et qu'elle subit les opérations de coupe.

De préférence, ces aiguilles souples sont métalliques et sont également cintrées afin d'améliorer encore l'accrochage de la salade.

Dans l'exemple représenté, le mandrin 36 comporte trois pointes ou aiguilles 38 inclinées radialement depuis le centre de la surface inférieure 36₁.

Si cela est jugé souhaitable, ces aiguilles 38 inclinées vers l'extérieur du mandrin 6 pourront également être inclinées dans une direction perpendiculaire à l'axe du mandrin c'est-à-dire en hélice et de préférence dans le sens de rotation de ce mandrin afin que l'accrochage de la salade se fasse automatiquement par vissage.

Suivant l'invention, il est également prévu de disposer, sous le mandrin 36, un dispositif palpeur 40 qui est relié au mécanisme moteur actionnant le piston 37 afin de commander le déplacement des aiguilles 38, depuis leur position rentrée jusqu'à leur position sortie, lorsque l'opérateur vient appliquer le trognon d'une salade contre l'extrémité inférieure de la tête 36. Suivant l'exemple de réalisation des figures 4 et 5, ce palpeur 40 est constitué par une pièce annulaire suspendue à coulissement, par des tiges 40₁, à l'extrémité inférieure du mandrin 36. Ces tiges 40₁ actionnent alors un contacteur électrique, non représenté, de façon à actionner l'organe moteur entraînant le piston 37 lorsque cette pièce 40 est complètement relevée et se trouve dans sa position 40₂.

Suivant l'exemple des figures 8 et 9, les pointes ou aiguilles 38 sont disposées radialement. Par contre, suivant l'exemple de réalisation des figures 10 et 11, elles sont orientées circulairement. Dans ce cas, les aiguilles sont montées à coulissement à l'extrémité inférieure d'un mandrin ou d'une tête 41 afin qu'en position sortie elles se disposent suivant deux cercles concentriques 42 et 43, les aiguilles de chaque cercle étant inclinées en direction opposée de façon à se croiser l'une l'autre et constituer ainsi un verrouillage efficace pour le maintien de la salade à l'état suspendu.

Comme on le remarque sur la figure développée de la figure 7, les aiguilles 42₁ du cercle extérieur 42 se croisent ainsi chacune deux fois avec les aiguilles 43₁ du cercle intérieur.

## Revendications

1. Machine pour l'épluchage de la salade comportant des moyens de coupe (9, 12, 16, 17, 20) caractérisée en ce qu'elle comporte des moyens (5) pour maintenir la salade à l'état suspendu par son trognon, et des moyens (3, 10) pour entraîner en rotation les moyens de maintien suivant l'axe de suspension de la salade afin de couper la salade alors qu'elle est entraînée en rotation sur elle-même à l'état suspendu par son trognon.

2. Machine conforme à la revendication 1, caractérisée en ce que les moyens pour placer la salade à l'état suspendu comprennent une pince pourvue d'au moins deux branches (5) dont les extrémités (5₁) sont adaptées pour saisir la salade par sa base à hauteur du trognon, ces extrémités comportant chacune au moins une dent (5₁) dirigée vers l'axe de la pince pour pénétrer dans la base de la salade à hauteur de son trognon.

3. Machine conforme à l'une quelconque des revendication précédentes, caractérisée en ce qu'elle comporte des moyens pour déplacer la salade et les moyens de coupe l'un vers l'autre, ces moyens comprenant un chemin de transfert (4) en circuit fermé sur lequel circulent des chariots (2) supportant chacun une pince de maintien à l'état suspendu d'une salade, les moyens de coupe étant répartis le long de ce circuit.

4. Machine conforme à l'une quelconque des revendications précédentes, caractérisée en ce que les moyens de coupe comprennent des moyens (9) pour couper les feuilles les plus extérieures de la salade à hauteur de leur base, des moyens (12, 17) pour couper les feuilles de la salade à hauteur de leurs extrémités puis des moyens (20) pour couper les feuilles subsistantes en morceaux transversalement à l'axe de la salade.

5. Machine conforme à la revendication 4, caractérisée en ce que les moyens pour couper les feuilles de la salade à hauteur de leurs extrémités comprennent des moyens de coupe verticaux (12), des moyens de coupe obliques (16) et des moyens de coupe horizontaux (17).

6. Machine conforme à la revendication 3, caractérisée en ce que les moyens de coupe sont disposés en plusieurs postes (8, 13, 14, 15, 19) répartis le long du circuit (4), chaque poste comportant au moins un moyen de coupe.

7. Machine conforme à la revendication 6, caractérisée en ce que les moyens pour entraîner en rotation relative les moyens de coupe et la salade comprennent des moyens d'entraînement (10) disposés à hauteur de chaque poste de coupe (8, 13, 14, 15 et 19) tandis que chaque pince est montée à rotation sur son chariot (2) par l'intermédiaire d'un axe (6).

8. Machine conforme à la revendication 3, caractérisée en ce que le circuit (4) comporte au moins une zone (4₁, 4₂) inclinée dans le sens de circulation des chariots et assurant le déplacement de ces chariots par gravité en direction des postes de travail.

9. Machine conforme à la revendication 1, caractérisée en ce que les moyens pour placer la salade à l'état suspendu comprennent des aiguilles (26, 38, 42₁, 43₁) mobiles par coulissement à l'extrémité d'une tête de support (2, 27, 36, 41) pour pénétrer dans le trognon (25) de la salade.

10. Machine conforme à la revendication 9, caractérisée en ce que les aiguilles sont inclinées.

11. Machine conforme à la revendication 10, caractérisée en ce que les aiguilles sont inclinées radialement.

12. Machine conforme à l'une quelconque des revendications de 9 à 12, caractérisée en ce que les aiguilles sont inclinées radialement vers l'extérieur depuis la zone centrale de l'extrémité (36₁) de la tête (36).

13. Machine conforme à l'une quelconque des revendications 9 et 10, caractérisée en ce que les aiguilles inclinées (42₁, 43₁) sont orientées sensiblement circulairement à la périphérie de la tête.

14. Machine conforme à l'une quelconque des revendications de 9 à 13, caractérisée en ce que les aiguilles (38, 42₁, 43₁) sont orientées pour se croiser à l'intérieur du trognon de la salade.

15. Machine conforme à la revendication 14, caractérisée en ce que les aiguilles sont orientées suivant deux cercles concentriques, les aiguilles de chaque cercle étant inclinées en sens contraire.

16. Machine conforme à l'une quelconque des revendications de 9 à 15, caractérisée en ce que les aiguilles sont souples.

17. Machine conforme à l'une quelconque des revendications de 9 à 16, caractérisée en ce que les aiguilles sont cintrées.

18. Machine conforme à l'une quelconque des revendications de 9 à 17, caractérisée en ce que les aiguilles sont montées à l'extrémité d'une pièce (37) coulissant axialement sur la tête, les aiguilles souples étant disposées à coulissement dans des guides courbes (39) de l'extrémité de la tête.

19. Machine conforme à l'une quelconque des revendications de 9 à 18, caractérisée en ce que la tête de support de la salade comporte à son extrémité un palpeur (40) mobile pour être actionné par le trognon d'une salade lors de sa mise en place contre la tête.

20. Machine conforme à la revendication 19, caractérisée en ce que le palpeur (40) est monté coulissant.

21. Machine conforme à l'une quelconque des revendications 19 ou 20, caractérisée en ce que le palpeur (40) comporte un contacteur disposé dans le circuit d'alimentation d'un organe moteur d'actionnement des aiguilles coulissantes (38).

22. Machine conforme à l'une quelconque des revendications de 9 à 21, caractérisée en ce que les aiguilles (38, 42₁, 43₁) sont disposées pour se placer dans deux positions extrêmes pour l'une desquelles les aiguilles ne dépassent pas sensiblement de l'extrémité de la tête et pour l'autre desquelles les aiguilles font saillie hors de la tête.

## Patentansprüche

1. Maschine zum Putzen von Salat, welche Schneidmittel (9,12,16,17,20) umfaßt, dadurch gekennzeichnet, daß sie Mittel (5), mittels deren der Salat an seinem Strunk in hängendem Zustand gehalten werden kann, sowie Mittel (3,10) zum Drehantrieb der Haltemittel um die Aufhängeachse des Salats umfaßt, um den Salat zu schneiden, während er um sich selbst in an seinem Strunk aufgehängtem Zustand drehangetrieben ist.

2. Maschine nach Anspruch 1, dadurch gekennzeichnet, daß die Mittel, mittels deren der Salat in den hängenden Zustand gebracht wird, eine Zange mit mindestens zwei Backen (5) umfassen, deren äußere Enden (5₁) dazu ausgebildet sind, den Salat an seinem Boden in Höhe des Strunkes zu erfassen und die jeweils eine gegen die Achse der Zange gerichtete Spitze (5₁) aufweisen, die dazu bestimmt ist, in den Boden des Salats in der Höhe seines Strunkes einzudringen.

3. Maschine nach einem der vorangehenden Ansprüche, dadurch gekennzeichnet, daß sie Mittel umfaßt, um den Salat und die Schneidmittel gegeneinander zu verlagern, wobei die Mittel einen Transferweg (4) mit geschlossenem Umlauf umfassen, auf welchem Wagen (2) umlaufen, die jeweils eine Zange zum Halten des Salats in hängendem Zustand tragen, wobei die Schneidmittel längs des Umlaufs verteilt sind.

4. Maschine nach einem der vorangehenden Ansprüche, dadurch gekennzeichnet, daß die Schneidmittel Mittel (9) zum Schneiden der äußersten Blätter des Salats in Höhe ihres Grundes, Mittel (12,17) zum Schneiden der Salatblätter an ihren äußeren Enden und Mittel (20) zum Schneiden der verbliebenen Salatblätter in Stücke quer zur Achse des Salats umfassen.

5. Maschine nach Anspruch 4, dadurch gekennzeichnet, daß die Mittel zum Schneiden der Salatblätter in Höhe ihrer äußeren Ende vertikale Schneidmittel (12), schräge Schneidmittel (16) und horizontale Schneidmittel (17) umfassen.

6. Maschine nach Anspruch 3, dadurch gekennzeichnet, daß die Schneidmittel in mehreren längs des Umlaufs (4) verteilten Stationen (8,13,14,15,19) angeordnet sind und jede Station mindestens ein Schneidmittel umfaßt.

7. Maschine nach Anspruch 6, dadurch gekennzeichnet, daß die Mittel zum gegenseitigen Drehantrieb der Schneidmittel und des Salates Antriebsmittel (10) umfassen, die in Höhe jeder Schneidstation (8,13,14,15,19) angeordnet sind, während jede Zange auf ihrem Wagen (2) auf einer Welle (6) drehbar angeordnet ist.

8. Maschine nach Anspruch 3, dadurch gekennzeichnet, daß der Umlauf (4) wenigstens eine Zone (4₁, 4₂) umfaßt, die im Sinne des Umlaufs der Wagen geneigt ist und die Verlagerung dieser Wagen unter Schwerewirkung in Richtung der Arbeitsstationen gewährleistet.

9. Maschine nach Anspruch 1, dadurch gekennzeichnet, daß die Mittel zum Halten des Salats in hängendem Zustand Nadeln (26,38,42₁,43₁) umfassen, die die in einer Führung am äußeren Ende eines Tragkopfes (2,27,36,41) beweglich sind, um in den Strunk (25) des Salats einzudringen.

10. Maschine nach Anspruch 9, dadurch gekennzeichnet, daß die Nadeln geneigt sind.

11. Maschine nach Anspruch 10, dadurch gekennzeichnet, daß die Nadeln radial geneigt sind.

12. Maschine nach einem der Ansprüche 9 bis 11, dadurch gekennzeichnet, daß die Nadeln über einen zentralen Bereich des äußeren Endes (36₁) des Kopfes (36) vorstehend radial nach außen geneigt sind.

13. Maschine nach einem der Ansprüche 9 und 10, dadurch gekennzeichnet, daß die geneigten Nadeln (42₁, 43₁) im wesentlichen kreisförmig am Umfang des Kopfes angeordnet sind.

14. Maschine nach einem der Ansprüche 9 bis 13, dadurch gekennzeichnet, daß die Nadeln (38,42₁,43₁) so angeordnet sind, daß sie sich im Inneren des Salatstrunks kreuzen.

15. Maschine nach Anspruch 14, dadurch gekennzeichnet, daß die Nadeln entlang konzentrischen Kreisen angeordnet sind, wobei die Nadeln jedes Kreises in entgegengesetztem Sinn geneigt sind.

16. Maschine nach einem der Ansprüche 9 bis 15, dadurch gekennzeichnet, daß die Nadeln biegsam sind.

17. Maschine nach einem der Ansprüche 9 bis 16, dadurch gekennzeichnet, daß die Nadeln bogenförmig ausgebildet sind.

18. Maschine nach einem der Ansprüche 9 bis 17, dadurch gekennzeichnet, daß die Nadeln am äußeren Ende eines Teils (37) befestigt sind, welches axial an dem Kopf gleitend verlagerbar ist, wobei die biegsamen Nadeln gleitend in gebogenen Führungen (39) des äußeren Endes des Kopfes angeordnet sind.

19. Maschine nach einem der Ansprüche 9 bis 18, dadurch gekennzeichnet, daß der Tragkopf des Salates an seinem äußeren Ende einen beweglichen Fühler (40) trägt, der durch den Strunk eines Salates betätigbar ist, wenn der Salat gegen den Kopf in Stellung gebracht wird.

20. Maschine nach Anspruch 19, dadurch gekennzeichnet, daß der Fühler (40) in einer Gleitführung angebracht ist.

21. Maschine nach Anspruch 19 oder 20, dadurch gekennzeichnet, daß der Fühler (40) eine Kontakteinrichtung umfaßt, die in dem Versorgungskreis eines Bewegungsorgans für die Betätigung der gleitfend geführten Spitzen (38) angeordnet ist.

22. Maschine nach einem der Ansprüche 9 bis 21, dadurch gekennzeichnet, daß die Spitzen (38,42₁,43₁) so angeordnet sind, daß sie sich zwischen zwei Grenzpositionen verlagern und in der einen derselben die Spitzen nicht wesentlich aus dem äußeren Ende des Kopfes hervorstehen, während in der anderen die Spitzen aus dem Kopf heraus vorspringen.

## Claims

1. Machine for cleaning lettuce comprising cutting means (9, 12, 16, 17, 20) characterised in that it comprises means (5) for holding the lettuce suspended by its stump, and means (3, 10) for rotationally driving the holding means about the axis of suspension of the lettuce in order to cut the lettuce whilst it is driven rotationally on itself suspended by its stump.

2. Machine in accordance with Claim 1, characterised in that the means for placing the lettuce in the suspended state comprise a gripper provided with at least two arms (5) whose ends (5₁) are shaped so as to grasp the lettuce by its base at the height of the stump, these ends each comprising at least one tooth (5₁) directed towards the axis of the gripper in order to penetrate into the base of the lettuce at the height of its stump.

3. Machine in accordance with any one of the preceding claims, characterised in that it comprises means for moving the lettuce and the cutting means towards each other, these means comprising a closed-circuit transfer path (4) on which there circulate carriages (2) each one supporting a gripper for holding a lettuce in the suspended state, the cutting means being distributed along this circuit.

4. Machine in accordance with any one of the preceding claims, characterised in that the cutting means comprise means (9) for cutting the outermost leaves from the lettuce at their base, means (12, 17) for cutting the leaves of the lettuce at their ends, and then means (20) for cutting the remaining leaves into pieces transversely to the axis of the lettuce.

5. Machine in accordance with Claim 4, characterised in that the means for cutting the leaves of the lettuce at their ends comprise vertical cutting means (12), oblique cutting means (16) and horizontal cutting means (17).

6. Machine in accordance with Claim 3, characterised in that the cutting means are arranged at several stations (8, 13, 14, 15, 19) distributed along the circuit (4), each station comprising at least one cutting means.

7. Machine in accordance with Claim 6, characterised in that the means for rotationally driving the cutting means and the lettuce relative to each other comprise drive means (10) arranged at each cutting station (8, 13, 14, 15 and 19) whilst each gripper is rotationally mounted on its carriage (2) by means of a spindle (6).

8. Machine in accordance with Claim 3, characterised in that the circuit (4) comprises at least one zone (4₁, 4₂) which is inclined in the direction of circulation of the carriages and ensures the movement of these carriages by gravity in the direction of the work stations.

9. Machine in accordance with Claim 1, characterised in that the means for placing the lettuce in the suspended state comprise needles (26, 38, 42₁, 43₁) which can move by sliding at the end of a support head (2, 27, 36, 41) in order to penetrate into the stump (25) of the lettuce.

10. Machine in accordance with Claim 9, characterised in that the needles are inclined.

11. Machine in accordance with Claim 10, characterised in that the needles are radially inclined.

12. Machine in accordance with any one of Claims 9 to 12, characterised in that the needles are radially inclined outwards from the central zone of the end (36₁) of the head (36).

13. Machine in accordance with either of Claims 9 and 10, characterised in that the inclined needles (42₁, 43₁) are directed substantially circularly at the periphery of the head.

14. Machine in accordance with any one of Claims 9 to 13, characterised in that the needles (38, 42₁, 43₁) are directed so as to cross over inside the stump of the lettuce.

15. Machine in accordance with Claim 14, characterised in that the needles are directed in two concentric circles, the needles of each circle being inclined in opposite directions.

16. Machine in accordance with any one of the claims from 9 to 15, characterised in that the needles are flexible.

17. Machine in accordance with any one of the claims from 9 to 16, characterised in that the needles are curved.

18. Machine in accordance with any one of the claims from 9 to 17, characterised in that the needles are mounted at the end of a component (37) sliding axially on the head, the flexible needles being arranged slidingly in curved guides (39) of the end of the head.

19. Machine in accordance with any one of the claims from 9 to 18, characterised in that the head for supporting the lettuce comprises, at its end, a feeler (40) which can move so as to be actuated by the stump of a lettuce when it is positioned against the head.

20. Machine in accordance with Claim 19, characterised in that the feeler (40) is slidingly mounted.

21. Machine in accordance with either one of Claims 19 and 20, characterised in that the feeler (40) comprises a contact arranged in the supply circuit of a drive member for actuating the sliding needles (38).

22. Machine in accordance with any one of the claims from 9 to 21, characterised in that the needles (38, 42₁, 43₁) are arranged so as to position themselves in two extreme positions, in one of which the needles do not substantially extend beyond the end of the head and in the other of which the needles project out of the head.
